# FASCICULE DE BREVET EUROPEEN

(11) **EP 2 416 946 B1**
(45) Date de publication et mention de la délivrance du brevet: **20.03.2013**
(21) Numéro de dépôt: 10712445.5
(22) Date de dépôt: 02.04.2010
(51) Int. Cl.: B29C 70/54

(54) **PROCEDE DE FABRICATION D'UN PANNEAU RAIDI EN MATERIAU COMPOSITE A MATRICE THERMOPLASTIQUE ET PANNEAU AINSI OBTENU**
VERFAHREN ZUR HERSTELLUNG EINER AUS EINEM THERMOPLASTISCHEN MATRIXVERBUNDMATERIAL HERGESTELLTEN VERSTEIFTEN PLATTE UND SICH ERGEBENDE PLATTE
PROCESS FOR MANUFACTURING A STIFFENED PANEL MADE OF A THERMOPLASTIC MATRIX COMPOSITE MATERIAL AND RESULTING PANEL

(30) Priorité: 06.04.2009 FR 0952224
(43) Date de publication de la demande: 15.02.2012
(73) Titulaire: European Aeronautic Defence And Space Company Eads France, 75016 Paris (FR)
(72) Inventeur: CAVALIERE, Frédérick, F-78180 Montigny Le Bretonneux (FR)
(74) Mandataire: Fourcade, Emmanuelle
(86) Numéro de dépôt international: PCT/EP2010/054458
(87) Numéro de publication internationale: WO 2010/115853

(56) Documents cités:
- EP-A- 1 918 089
- US-A- 4 946 526
- US-B1- 6 613 258

## Description

Le domaine de l'invention est relatif au domaine de la fabrication des pièces de formes complexes en matériau composite. Plus précisément, l'invention concerne un procédé particulièrement adapté à la réalisation de pièces en matériau composite à matrice thermoplastique et comportant des éléments de renfort à section transversale fermée creuse.

L'invention concerne également des pièces en matériaux composites adaptées à la mise en oeuvre du procédé.

Les matériaux composites sont aujourd'hui largement utilisés pour la fabrication de pièces dans de nombreux domaines industriels, en particulier dans le domaine aéronautique, y compris pour des pièces structurales, c'est à dire devant supporter des efforts significatifs de l'ordre de grandeur de leur résistance structurale lors de leur utilisation.

De nombreux matériaux composites existent, les plus répandus étant constitués de fibres plus ou moins longues de matières minérales ou organiques (verre, carbone, aramide...) contenues dans une matrice formée par une résine thermodurcissable ou thermoplastique.

La fabrication de pièces composites thermodurcissables comprend l'imprégnation d'un renfort de fibres par une résine thermodurcissable, et la solidification de la pièce est obtenue par la polymérisation de la résine. La fabrication de pièces composites thermoplastiques comprend l'imprégnation d'un renfort de fibres par une résine thermoplastique, sa mise en pression et en température, généralement à haute pression et température. La solidification de la pièce est obtenue lors du refroidissement.

Certaines pièce structurales sont composées d'une peau et d'éléments de renfort, dits raidisseurs, solidaires de la peau, par exemple les panneaux mis en oeuvre dans la fabrication de fuselages ou d'ailes d'aéronefs. Les raidisseurs ont des sections transversales de formes diverses. A titre d'exemple, on peut citer une section en forme de Z, J ou encore T. Ces formes, qui ont l'avantage d'être ouvertes, permettent de réaliser des raidisseurs pouvant être réalisés simultanément avec la peau au moyen de moules simples à extraire, mais présentent un inconvénient majeur lorsque la pièce est soumise à certains efforts. En effet, lorsque le raidisseur est chargé en compression, celui-ci a tendance à déverser, c'est à dire à se coucher plus ou moins par rapport à la peau sur laquelle ils sont fixés.

US-A-4 946 526 décrit les caractéristiques du préambule des revendications 1 et 7.

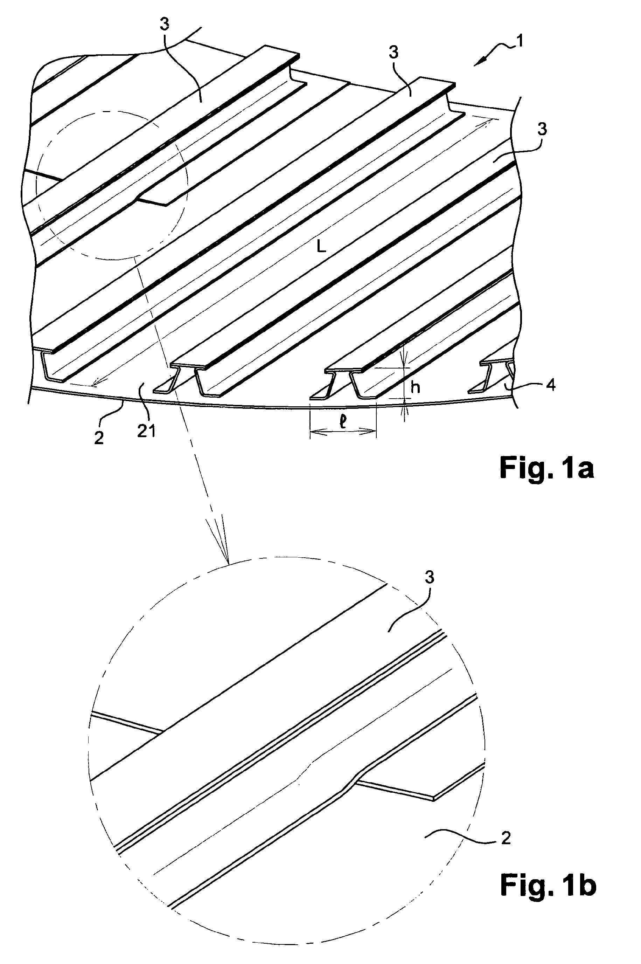

Pour éviter ce déversement, il est préféré d'utiliser des raidisseurs à section fermée, par exemple en forme de oméga, comportant deux semelles, deux âmes et une tête, comme les raidisseurs illustrés sur la figure 1 a. A masse équivalente, une pièce comportant des raidisseurs de type oméga présente, en plus d'une meilleure stabilité, une inertie améliorée par rapport à une pièce comportant des raidisseurs type T ou Z.

Cependant une difficulté particulière rencontrée lors de la réalisation de pièces comportant un raidisseur de type oméga est liée à l'existence d'une cavité fermée dans le raidisseur, ouverte seulement aux extrémités du raidisseur.

Dans le cas de la réalisation de pièces au moyen de matériau composite à base de résine thermodurcissable, par exemple de type époxy, une solution connue consiste à réaliser simultanément les différents éléments de la pièce (peau et raidisseurs) en intégrant un noyau de remplissage en lieu et place d'une cavité, avant l'étape de polymérisation. Ce noyau de remplissage doit présenter des caractéristiques telles qu'il puisse supporter les températures de polymérisation, par exemple de l'ordre de 180°C pour les résines de classe 180, et les pressions relativement modérées (de l'ordre de 7 à 9 bars) mises en oeuvre dans ce type de procédé. Ces performances relativement limitées exigées par ce procédé permettent de réaliser des noyaux extractibles après la polymérisation sans difficulté majeure et généralement réutilisables.

Dans le cas de la réalisation de pièces au moyen de matériau composite à base de résine thermoplastique, par exemple de type polyétheréthercétone (PEEK) ou polysulfure de phénylène (PPS), il est nécessaire d'élever la température à des valeurs plus élevées, par exemple généralement de l'ordre de 400°C, pour atteindre la refusion totale ou partielle de la résine et de mettre en oeuvre des pressions nécessaires à la consolidation du matériau pouvant atteindre plusieurs fois celles utilisées dans le cas des matériaux thermodurcissables.

La réalisation d'un noyau extractible présentant les caractéristiques, en particulier de stabilité dimensionnelle aux températures et pressions considérées, adaptées à la mise en oeuvre de cette technologie avec des raidisseurs à section fermée s'avère ainsi beaucoup plus difficile.

Il n'existe pas de technologie simple et d'un coût industriellement acceptable permettant de remplir la cavité du raidisseur en oméga pendant une opération de fabrication de la pièce et étant extractible facilement, notamment lorsque la pièce est de grande longueur, présente une ou des courbures et ou des sections de raidisseur variables, par exemple en raison de soyages sur la face de la peau où sont fixés les raidisseurs.

De ce fait la réalisation de pièces composites à matrice thermoplastique qui implique la mise en oeuvre de noyaux dans les cavités des raidisseurs lors d'opérations de consolidation et ou co-consolidation, s'avère relativement difficile et onéreuse, voire industriellement impossible.

Par le terme consolidation, on entend les opérations de réalisation d'une pièce thermoplastique élémentaire.

Par le terme co-consolidation, on entend les opérations de réalisation d'une pièce thermoplastique composée de plusieurs pièces thermoplastiques élémentaires, ces pièces élémentaires pouvant être préalablement consolidées ou non.

Dans un mode de réalisation préféré, les panneaux autoraidis sont co-consolidés, c'est à dire que les raidisseurs sont préalablement consolidés, la peau est préalablement soit consolidée, soit non consolidée, soit drapée sur les raidisseurs consolidés, puis la peau et les raidisseurs sont consolidés simultanément.

Le procédé de co-consolidation permet d'obtenir une interface ayant une bonne santé matière et de très bonnes propriétés mécaniques, particulièrement recherchées notamment pour les liaisons entre les semelles des raidisseurs et la peau.

Cependant, la solution consistant à réaliser une pièce autoraidie en co-consolidation sans utiliser de noyaux démoulables pour remplir les cavités fermées des raidisseurs ne s'avère pas satisfaisante pour tirer tous les bénéfices apportés par les matériaux thermoplastiques. En effet, le comportement réversible des résines thermoplastiques, c'est à dire le fait que leurs viscosités diminuent lorsqu'elles sont chauffées à un niveau de température suffisant, les rend instables et peut provoquer une déconsolidation des pièces thermoplastiques élémentaires si la pièce autoraidie n'est plus sous pression. Ainsi, l'intégration d'un raidisseur en oméga, préalablement consolidé, sur la peau lors de l'étape de co-consolidation sans noyau pour remplir la cavité du raidisseur n'est actuellement pas envisageable pour obtenir une pièce autoraidie ayant une bonne géométrie et une bonne santé matière et il convient de mettre en oeuvre d'autres techniques d'assemblage.

Les techniques actuelles consistent à assembler le raidisseur en oméga sur la peau, tous deux préalablement consolidés séparément et à réaliser un assemblage par diffusion d'un matériau d'interposition entre les semelles du raidisseur et la peau, ou par soudage statique ou dynamique entre les semelles du raidisseur et la peau.

Par le terme de soudage, on entend un assemblage des pièces élémentaires par un chauffage des pièces élémentaires localisé au niveau d'une interface de liaison entre lesdites pièces élémentaires.

Par le terme de soudage statique, on entend un assemblage des pièces élémentaires par une opération de chauffage simultanément sur la totalité de l'interface de liaison à souder.

Par le terme de soudage dynamique, on entend un assemblage des pièces élémentaires par une opération de soudage locale, sur une zone limitée, répétée sur la totalité de l'interface de liaison à souder.

Cependant, les techniques d'assemblage sont généralement difficiles à mettre en oeuvre, ou présentent des inconvénients et/ou limitations.

Les techniques d'assemblage ou de soudage sont par exemple :
- L'assemblage ou le soudage par ajout d'un matériau thermoplastique d'interposition.
   Cette méthode consiste à intégrer sur chaque pièce élémentaire (peau, raidisseur), lors de leur réalisation et au niveau d'une interface de liaison (liaison semelle-peau), un matériau d'interposition, tel que par exemple un film de résine, présentant une température de fusion inférieure à celle de la résine contenue dans les différentes pièces élémentaires à assembler. L'assemblage ou le soudage est obtenu par diffusion des molécules de la résine du matériau thermoplastique d'apport, à une température inférieure à la température de fusion de la résine contenue dans les différentes pièces élémentaires, préservant ainsi la géométrie et la santé matière des pièces élémentaires de la pièce. Cependant, cette méthode nécessite d'assembler ou de souder sous pression, un autoclave ou une presse est donc requis. Elle nécessite également d'intégrer un matériau d'interposition en surface lors de la fabrication des pièces élémentaires et une bonne maîtrise des tolérances géométriques à l'interface des pièces à assembler ou à souder.
- Le soudage par ultrasons :
   C'est une méthode de soudage dynamique qui permet de souder directement deux pièces élémentaires (la peau et le raidisseur) entre elles sans matériau d'interposition. Elle consiste à associer une pression d'appui, au niveau de l'interface entre les deux pièces élémentaires, à une vibration ultrasonore, générée par un outil vibrant, ou sonotrode. L'énergie locale transmise par les ultrasons, produit un échauffement intense à l'interface et permet la soudure à l'interface entre les deux pièces élémentaires lorsque la résine des pièces élémentaires est thermo-fusible. Cependant cette méthode ne permet le soudage que sur une bande, dit cordon, relativement étroite. De plus, on observe la présence d'effets de bords en début et fin de soudage. La méthode nécessite un effort de contact non négligeable. La méthode est également sensible à la variation d'épaisseur des structures à souder, et elle nécessite une bonne maîtrise des tolérances géométriques à l'interface des pièces élémentaires à souder.
- Le soudage par induction :
   C'est une méthode de soudage dynamique qui consiste à échauffer un matériau métallique, tel que par exemple un grillage métallique, introduit à l'interface de liaison des pièces élémentaires à souder pour provoquer la fusion recherchée de la résine. L'échauffement est obtenu par génération d'un courant électrique dans le matériau métallique dû au déplacement d'un fort champ magnétique local à proximité de l'interface à souder. Cependant, cette méthode présente quelques inconvénients, tels que par exemple, la nécessité d'intégrer un matériau métallique au niveau de l'interface à souder, le soudage sur un cordon relativement étroit, une sensibilité à la variation d'épaisseur des pièces élémentaires à souder, la nécessité d'une maîtrise des tolérances géométriques, et une possible perturbation provoquée par une éventuelle présence sur la surface extérieure d'une protection métallique contre la foudre,
- Le soudage par résistance :
   C'est une méthode de soudage dynamique qui consiste également à échauffer un matériau métallique, tel que par exemple un grillage métallique, introduit à l'interface de liaison des pièces élémentaires à souder. L'échauffement est obtenu par le passage d'un courant électrique. Comme dans le cas du soudage par induction, cette méthode présente quelques inconvénients, tels que par exemple, la nécessité d'intégrer un matériau métallique au niveau de l'interface à souder, la maîtrise des tolérances géométriques à l'interface des pièces élémentaires à souder.

Les principales techniques de soudage dynamique sont difficiles à mettre en oeuvre dans les zones où la peau présente des variations significatives et ou brutales d'épaisseur, telles dans l'exemple de panneau illustré sur la figure 1 b.

Il est également difficile de recourir aux techniques de soudage dynamique lorsque les semelles présentent une largeur variable.

La présente invention vise à remédier aux inconvénients des pièces autoraidies existantes, notamment aux inconvénients d'assemblage entre les semelles et la peau énoncés ci-avant, en proposant une solution d'intégration d'un raidisseur présentant une section fermée creuse sur une peau qui permette la réalisation de pièces autoraidies de géométrie complexe et qui améliore la tenue mécanique à l'interface semelles/peau permettant de bénéficier des propriétés du matériau composite thermoplastique.

L'invention propose un procédé pour la fabrication d'une pièce raidie réalisée en matériau composite comportant des fibres organiques ou minérales maintenues dans une matrice organique.

La pièce raidie comporte une peau formée principalement d'un matériau composite thermoplastique et au moins un raidisseur de longueur **L** grande par rapport à ses dimensions transversales, largeur **I** et hauteur **h**.

Le raidisseur considéré comporte deux semelles, deux âmes, chaque âme étant solidaire au niveau d'un premier bord d'une semelle, et comporte une tête solidarisant les deux âmes entre elles au niveau d'un second bord de chaque âme, distant du premier bord, lesdites deux âmes et la tête déterminant avec la peau un volume creux du raidisseur de section transversale fermée lorsque le raidisseur, dont la forme générale de la section est dite en Ω, est solidaire de la peau au niveau des semelles.

Suivant le procédé, afin de pouvoir assembler le raidisseur sur la peau en plusieurs étapes, et de tirer le meilleur parti des avantages potentiels des matériaux composites thermoplastique en terme de façonnage et d'assemblage, le procédé comporte :
- une étape de réalisation :
   - d'un premier élément du raidisseur, dans un matériau composite thermoplastique, comportant une première semelle et une première âme ou au moins une partie d'une première âme,
   - d'un deuxième élément du raidisseur, dans un matériau composite thermoplastique, comportant une deuxième semelle et une deuxième âme ou au moins une partie d'une deuxième âme,
   - d'un troisième élément comportant la tête,
- une étape de positionnement aux emplacements voulus sur une surface de la peau des semelles des premier et deuxième éléments,
- une étape de solidarisation de la peau et des premier et deuxième éléments par co-consolidation du matériau thermoplastique de ladite peau et des semelles des dits premier et deuxième éléments,
- une étape de fixation du troisième élément sur les seconds bords des premier et deuxième éléments au niveau de zones de jonction.

Pour réaliser l'étape de co-consolidation des semelles du raidisseur et de la peau, en appliquant les pressions nécessaires simultanément à l'élévation de la température du matériau composite thermoformable et sans risquer de déformer les éléments de la pièce, un noyau est placé à l'emplacement du volume creux du raidisseur, entre les premier et deuxième éléments, avant l'étape de positionnement de la peau et des premier et deuxième éléments, et le noyau est retiré avant l'étape de fixation du troisième élément.

Pour permettre une extraction aisée du noyau, en particulier si les âmes du raidisseur sont enveloppantes en raison de la forme du raidisseur, le noyau est avantageusement réalisé en au moins deux parties pour pouvoir être extrait par partie par l'ouverture longitudinale laissée libre entre les âmes avant la mise en place du troisième élément.

Avantageusement, le troisième élément est fixé sur les seconds bords des premier et deuxième éléments au niveau des zones de jonction par un procédé de soudage qui permet de réaliser la solidarisation du troisième élément aux autres parties du raidisseur.

Les procédés de soudage consistent avantageusement, et de manière non limitative, en un procédé de soudage dynamique tel que le procédé de soudage par ultrason, un procédé de soudage par induction ou un procédé de soudage par résistance, qui sont adaptés aux matériaux thermoplastiques.

De manière alternative, le troisième élément est fixé sur les seconds bords des premier et deuxième éléments au niveau des zones de jonction par un procédé de soudage par points. Ce procédé consiste à appliquer un procédé de soudage de manière intermittente en une série de points.

De manière alternative ou en combinaison avec un autre procédé d'assemblage, le troisième élément est fixé sur les seconds bords des premier et deuxième éléments au niveau des zones de jonction par rivetage. Il est ainsi possible de réaliser le troisième élément dans un matériau qui ne présente pas nécessairement des caractéristiques thermoplastiques ou dont la résine n'est pas obligatoirement compatible avec celle des autres éléments.

En outre il est possible de réaliser des réparations d'un décollement local, par exemple d'une soudure, par un procédé différent, par exemple d'un rivetage ou d'un soudage par point, disponible et plus pratique à réaliser sur la pièce lorsque celle-ci est exploitation par exemple sur un avion.

L'invention concerne également un panneau raidi pour lequel le procédé de l'invention s'avère particulièrement avantageux.

Le panneau raidi de l'invention est principalement en matériau composite comportant des fibres organiques ou minérales maintenues dans une matrice organique.

Il comporte une peau formée principalement d'un matériau composite thermoplastique et au moins un raidisseur de longueur **L** grande par rapport à ses dimensions transversales, largeur **I** et hauteur **h**, le raidisseur déterminant avec la peau un volume creux de section transversale fermée.

Dans le panneau de l'invention, le raidisseur considéré comporte trois éléments assemblés entre eux :
- un premier élément en matériau composite thermoplastique comportant une première semelle, solidaire de la peau, et une première âme, ou d'une partie d'une première âme, solidaire de la première semelle le long d'un premier bord de ladite première âme,
- un deuxième élément en matériau composite thermoplastique comportant une deuxième semelle, solidaire de la peau, et une deuxième âme, ou d'une partie d'une deuxième âme, solidaire de la deuxième semelle le long d'un premier bord de ladite deuxième âme,
- un troisième élément comportant une tête, rapporté sur un second bord de chaque âme, ou de chaque partie d'âme, opposé au premier bord, desdites première et deuxième âmes, ou parties d'âmes, au niveau d'une zone de jonction.

Pour assurer une liaison optimale du raidisseur avec la peau au niveau des semelles, liaison fortement chargée, les première et seconde semelles en matériau composite thermoplastique sont co-consolidées avec la peau en matériau composite thermoplastique.

Avantageusement les variations éventuelles de géométrie des zones de jonction, entre le premier élément et le troisième élément du raidisseur d'une part et entre le deuxième élément et le troisième élément du raidisseur d'autre part, sont compatibles d'un procédé d'assemblage entre eux desdits éléments par soudage moins traumatisant pour la pièce afin de permettre la mise en oeuvre d'un tel procédé de soudage dans une zone moins chargée que la jonction des semelles avec la peau.

Suivant les contraintes de la fixation du troisième élément, en particulier de la dimension de la surface de contact dans la zone de jonction, une zone de jonction est déterminée :
- par une surface de contact entre une extrémité, ou une extension d'extrémité, d'une âme et des rebords longitudinaux de la tête ;
- par une surface de contact entre une extrémité ou une extension d'extrémité d'une partie d'âme des premier et ou deuxième éléments et une partie d'âme ou une extension d'une partie d'âme.

Pour assembler aisément les éléments du raidisseur entre eux par des procédés de thermosoudage, avantageusement le troisième élément est également réalisé dans un matériau composite thermoplastique.

Dans une forme particulière de réalisation que permet de réaliser sans éléments ajoutés la réalisation séparée du troisième élément, le troisième élément est pourvu de moyens d'accrochage pour la fixation d'éléments extérieurs au panneau tels que par exemple des tuyauteries, des harnais électriques ou des supports pour de tels équipements.

Dans une autre forme particulière de réalisation de l'invention, lorsque le raidisseur est de section fermée en Ω, des supports spécifiques, complémentaires de la forme du raidisseur, plus spécifiquement de la tête du raidisseur, sont fixés sur le raidisseur, sans nécessiter de perçage dudit raidisseur ou de collage des supports spécifiques sur ledit raidisseur, lesdits supports permettant la fixation d'éléments extérieurs au panneau raidi tels que tuyauteries, harnais électriques ou supports pour de tels équipements.

La description détaillée de l'invention est faite en référence aux figures qui représentent :
Figure 1a, déjà citée, une vue schématique en perspective d'un panneau raidi,
Figure 1b, un agrandissement de la figure 1 a dans une zone de variation d'épaisseur de la peau,
Figures 2a à 2r, différents exemple de raidisseurs suivant l'invention illustrant des formes différentes de réalisation,
Figure 3, une vue en perspective du raidisseur de la figure 2r,
Figure 4, une vue en perspective d'un raidisseur comportant des moyens complémentaires d'accrochage de système,
Figure 5, une vue schématique en perspective d'un panneau raidi avec des raidisseurs comportant des semelles de largeur variable,
Figures 6a à 6h, une illustration des différentes étapes du procédé suivant l'invention.

Un panneau raidi 1 en matériau composite suivant l'invention, comme illustré sur la figure 1 a, comporte une peau 2 et des raidisseurs 3 sur une des faces 21 de la peau 2.

Un tel panneau raidi peut comporter d'autres éléments de structure, non spécifique de l'invention, ou des accessoires, tels que des ouvertures, des renforts locaux, des inserts ..., qui ne sont pas représentés pour ne pas surcharger les dessins.

Un tel panneau comporte également le cas échéant des raidisseurs sur une face opposée à la face 21, solution non représentée.

Un raidisseur 3 est un élément de structure de forme allongée, c'est à dire qu'il présente une dimension caractéristique, la longueur **L,** grande devant les autres dimensions d'une section, la largeur **I** et la hauteur **h.** De manière générale, la largeur **I et** la hauteur **h** sont différentes suivant la position de la section considérée sur la longueur et le raidisseur a une forme plus ou moins complexe sur la longueur (courbures, vrillages, variation de hauteur) en fonction de la forme voulue du panneau et de caractéristiques recherchées. Le raidisseur 3 considéré dans le cadre de l'invention présente une section transversale fermée, lorsqu'il est solidaire du panneau 2, formant un volume creux.

A titre d'exemple non limitatif, la figure 1 a illustre un panneau dont les raidisseurs en forme de oméga présentent une section transversale fermée.

L'exemple de réalisation est décrit de manière détaillée dans son application au cas d'un panneau de courbure simple. Ce choix n'est pas limitatif et l'invention s'applique également à d'autres formes de panneaux raidis, tels que des panneaux raidis par des cadres ou d'autres structures présentant une fois réalisée au moins une cavité 4.

Les matériaux composites auxquels s'adresse l'invention sont les matériaux comportant, au moins pendant une étape d'assemblage des raidisseurs avec la peau, des propriétés thermoplastiques comportant des fibres, telles que par exemple des fibres de verre, d'aramide ou de carbone, emprisonnées dans une matrice organique, telle que par exemple une résine polyétheréthercetone (PEEK) ou une résine polysulfure de phénylène (PPS).

Par propriété thermoplastique on entend une matrice prenant un état plastique lorsque sa température est portée à une valeur dite de formage plastique et présentant un état solide lorsque la température est abaissée à une valeur correspondante à une température de mise en oeuvre de la pièce.

Pour bien identifier l'intérêt de l'invention, il convient de remarquer que les pièces considérées sont le plus souvent réalisées à partir de matériaux composites dits thermoplastiques se présentant sous la forme de plaques planes d'épaisseur sensiblement constantes et qui sont formées à chaud pour prendre la forme recherchée, par exemple dans des moules. Les épaisseurs voulues, le plus souvent fonction de l'emplacement considéré sur la pièce, sont obtenues, à chaud et sous pression, par des empilages de plaques préalablement découpées afin de réaliser la cohésion structurale des plaques par une opération dite de co-consolidation au cours de laquelle la résine de la matrice des plaques empilées est mélangée à l'interface entre les plaques et les différents plans de fibres sont rapprochés pour obtenir une bonne santé de la matière.

L'invention est décrite en détail pour un raidisseur d'un panneau mais l'invention est applicable à un panneau comportant un nombre quelconque de raidisseurs.

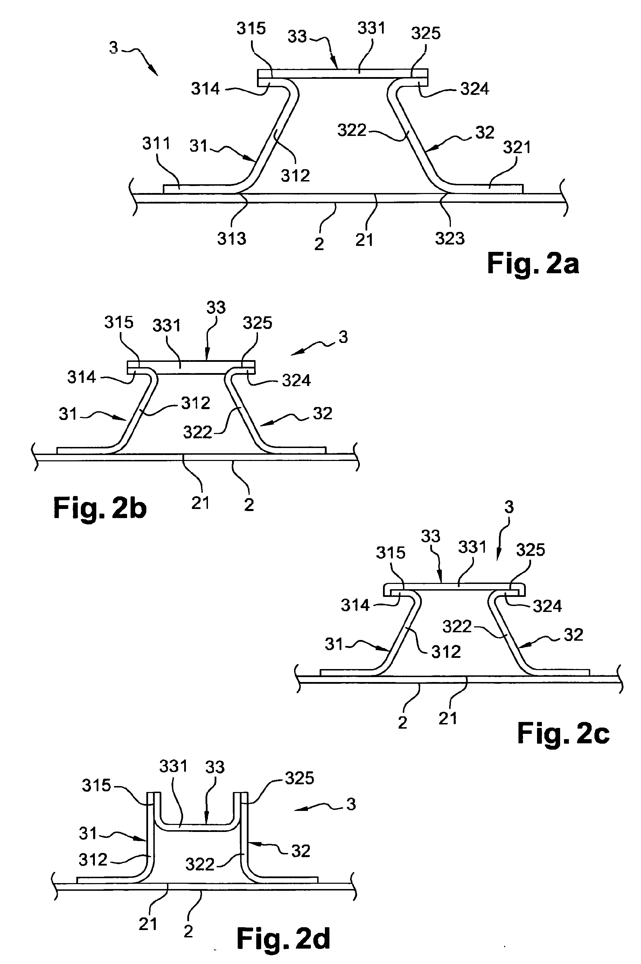

De manière connue, un raidisseur de section fermé, tel qu'un raidisseur à section en oméga de la figure 2a, comporte une première 311 et une seconde 321 semelles solidaires de la peau 2 au niveau d'une face 21 de la dite peau, une première 312 et une seconde 322 âmes solidaires des semelles respectivement 311, 321, et une tête 331 solidaire des âmes de sorte que la peau 2, les âmes 312, 322 et la tête 331 forment une section fermée, le plus souvent, mais non nécessairement, sensiblement symétrique par rapport à un axe du raidisseur sensiblement perpendiculaire à la peau.

Suivant une forme connue, un tel raidisseur est formé en une seule partie, par exemple par formage à chaud, en déformant plastiquement un flan d'un matériau composite thermoplastique pour obtenir un raidisseur.

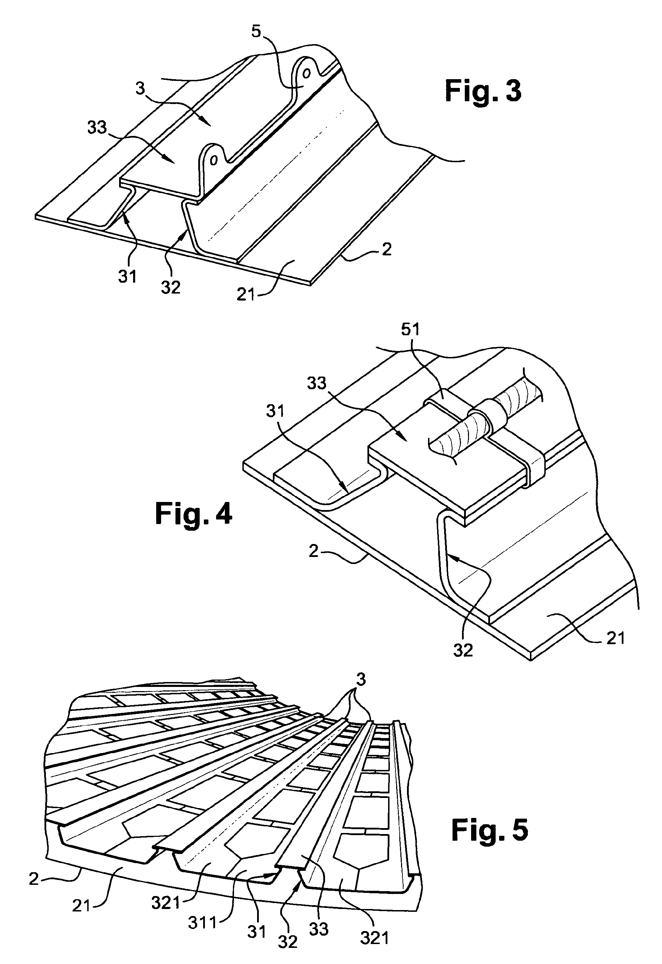

A contrario, suivant l'invention, comme illustré sur les figures 2a à 2r et 3, le raidisseur 3 comporte trois éléments assemblés entre eux :
- un premier élément 31 solidaires de la peau, comportant au moins la première semelle 311 ;
- un deuxième élément 32 solidaire de la peau comportant au moins la seconde semelle 321 ;
- un troisième élément 33 solidaire du premier 31 et du deuxième 32 éléments, ledit troisième élément comportant au moins la tête 331.

Les premier et deuxième éléments 31, 32 du raidisseur sont réalisés dans un matériau composite thermoplastique dont la matrice est compatible avec celle du matériau composite de la peau 2.

Les semelles 311, 321 sont co-consolidées avec la peau 2 ce qui se caractérise au niveau de la jonction semelle-peau par une co-fusion de la résine thermoplastique au niveau de l'interface entre les semelles et la peau.

La solidarisation des semelles avec la peau par co-consolidation est réalisable sans difficulté même lorsque les semelles présentent une largeur variable, comme illustré sur la figure 5.

Le troisième élément 33 est de préférence réalisé dans un matériau composite thermoplastique de même nature que le matériau des premier et deuxième éléments 31, 32. Ce choix permet de garantir la compatibilité de matériau entre les différents éléments.

Ce choix n'est cependant pas imposé.

Le troisième élément 33 est solidaire des premier 31 et deuxième 32 éléments par assemblage. L'assemblage peut être obtenu par exemple par rivetage, par collage, par soudage statique ou dynamique, ou par combinaison de techniques d'assemblage compatibles avec les matériaux mis en oeuvre pour réaliser les différents éléments assemblés, tel que par exemple le soudage et le rivetage.

Suivant un premier mode de réalisation, comme illustré sur les figures 2a à 2h, le premier élément 31 comporte la première semelle 311 et la première âme 312 inclinée par rapport à un plan local de la semelle et solidaire, le long d'un premier bord 313, de la première semelle 311. Le deuxième élément 32 comporte la deuxième semelle 321, la deuxième âme 322 inclinée par rapport au plan de la deuxième semelle 321 et solidaire, le long d'un premier bord 323, de la deuxième semelle 321.

Suivant ce premier mode, la tête 331 est rapportée sur des seconds bords 314, 324, opposés aux premiers bords, respectivement 313, 323, des âmes 312, 322, déterminant une zone de jonction entre la tête et les âmes. La tête 331 est ainsi maintenue à une distance sensiblement constante de la face 21 de la peau 2.

Dans un premier exemple de réalisation de ce premier mode, illustré sur les figures 2a, 2b et 2c, la tête 331 est sensiblement plane et rapportée sur des surfaces de contact 315, 325 des zones de jonction, des seconds bords 314, 324 formés par les extensions des âmes 312, 322. La zone de jonction présente ainsi une épaisseur correspondant à l'épaisseur cumulée de l'âme et de la tête, s'étendant vers l'extérieur du raidisseur 3, et qui participe avantageusement à augmenter l'inertie du raidisseur.

Les surfaces de contact 315, 325 présentent chacune une largeur suffisante pour permettre l'assemblage des éléments entre eux avec la résistance structurale souhaité et par le procédé mis en oeuvre.

Avantageusement la largeur desdites surfaces de contact peut aisément être adaptée, en particulier en fonction du type d'assemblage mis en oeuvre, en choisissant la dimension suivant la largeur du raidisseur des extensions des âmes.

Avantageusement, les surfaces de contact présentent des évolutions de leurs formes et en particulier de leurs courbures locales, en particulier suivant le sens longitudinal du raidisseur, compatible avec la technique d'assemblage devant être mise en oeuvre pour fixer la tête 331 aux premier et deuxième éléments 31, 32.

Cette courbure locale est le cas échéant différente, en ce qu'elle présente des rayons de courbure toujours suffisamment grands pour répondre aux exigences de la technique d'assemblage mise en oeuvre, des courbures locales des semelles qui peuvent être de rayons de courbure localement petits, voire en marches d'escalier, pour suivre les variations de la surface 21 de la peau 2.

Dans ce premier exemple de réalisation, les surfaces de contact 315, 325 sont dans un plan local de la tête 331 sensiblement parallèle à la face 21 de la peau sur laquelle est assemblé le raidisseur, comme illustrée sur les figures 2a, 2b et 2c. Le raidisseur 3 présente une section en forme de Ω.

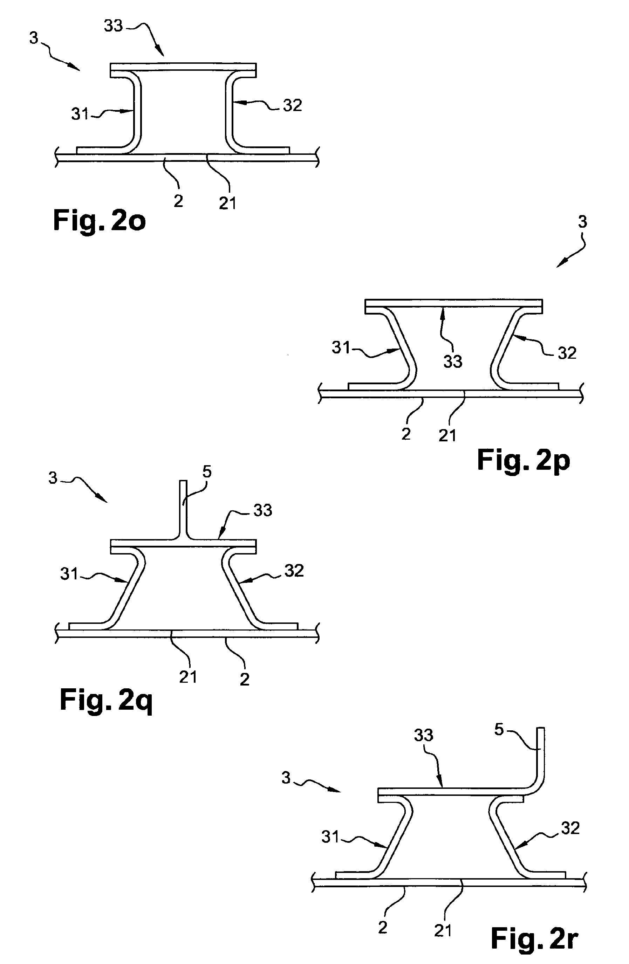

La forme caractéristique présentée sur la figure 2a est cependant susceptible de variations en fonction de l'angle avec lequel chaque âme est inclinée par rapport à la surface de la peau 2. La figure 2o illustre un exemple dans lequel les âmes sont sensiblement perpendiculaires localement à la peau et la figure 2p présente un exemple où les âmes s'écartent l'une de l'autre lorsque l'on s'éloigne de la peau. De telles situations peuvent dans certaines situations permettre des extractions de noyaux de moulage simples comme il sera compris dans la description du procédé.

La forme de la tête 331 est, dans des variantes de ce premier exemple, adaptée pour faciliter un positionnement précis de la tête sur les surfaces de contact 315, 325. Par exemple un lamage est réalisé sur chaque bord de la tête à l'emplacement desdites surfaces de contact comme illustré sur la figure 2b ou des bords tombés sont réalisés sur la tête comme illustré sur la figure 2c.

Dans un exemple particulier, la tête 331 et les âmes 312, 322 présentent une géométrie sensiblement constante et la peau 2 présente une géométrie variable liée à des variations d'épaisseur de la peau, telles que la présence de soyage.

Ainsi, la géométrie sensiblement constante de la tête et des âmes permet avantageusement d'assurer une qualité d'assemblage homogène sur toute la zone de jonction.

Dans un autre exemple de réalisation voisin, illustré sur les figures 2d à 2f, les surfaces de contact 315, 325 ne sont pas dans un plan local sensiblement parallèle à la face 21 de la peau et s'éloignent sensiblement de ce plan local.

Dans la variante de la figure 2d, les surfaces de contact 315, 325 sont dans un plan local de leur âme 312, 322 respective.

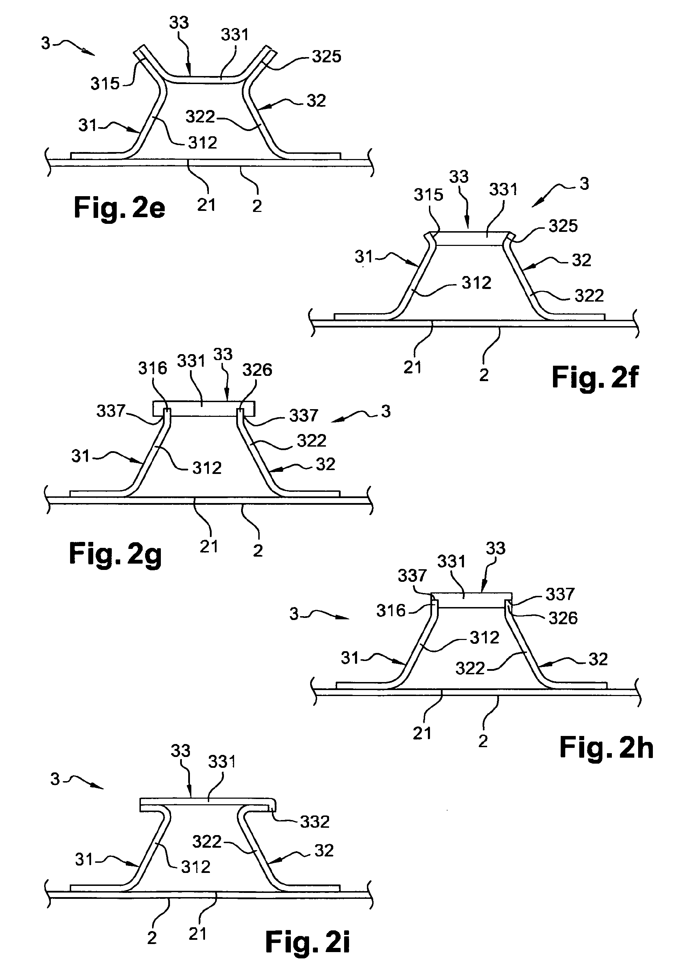

Dans une autre variante de réalisation, les surfaces de contact 315, 325 sont dans un plan local intermédiaire entre celui déterminé par la tête 331 d'une part et par les âmes respectives 312, 322, d'autre part, comme illustrée sur la figure 2e.

La variante présentée sur la figure 2f est très voisine de la variante de la figure 2e, les largeurs des surfaces de contact 315, 325 étant réduites sensiblement à une surface d'une section latérale de la tête 331, ce qui est possible lorsque l'épaisseur du troisième élément 33 permet d'obtenir une surface de contact suffisante pour assurer l'assemblage suivant le procédé choisi.

Dans un troisième exemple de réalisations, la tête 331 est rapportée sur des extrémités 316, 326 des seconds bords, formant tout ou partie des surfaces de contact d'une zone de jonction, respectivement 314, 324, des âmes, respectivement 321, 322.

Dans une forme de réalisation, la tête 331 comporte deux rainures 337 adaptées pour recevoir chacune une extrémité 316, 326 d'une âme, respectivement 321, 322, comme illustrée sur la figure 2g.

Dans une variante de réalisation suivant cet exemple, les rainure 337 sont situées sur la tête 331 au niveau des bords de ladite tête, formant ainsi des soyages adaptés pour recevoir chacune une extrémité 316, 326 d'âme, comme illustrée sur la figure 2h.

De préférence, le raidisseur présente une symétrie par rapport à un plan de longitudinal, comme illustré sur les exemples des figures 2a à 2h, mais le raidisseur peut également présenter une structure dissymétrique, comme illustré sur la figure 2i.

Dans cet exemple la tête 331 présente un bord tombé 332 sur un seul bord de sorte que son positionnement lors de l'assemblage est réalisé de manière précise contre l'âme située du côté dudit bord tombé sans créer de contrainte par rapport à l'autre âme du raidisseur 3.

Suivant un deuxième mode de réalisation, comme illustré sur les figures j à n, le premier élément 31 comporte la première semelle 311 et une partie 312a d'une première âme inclinée par rapport au plan de la semelle et solidaire, le long d'un premier bord 313, de la première semelle 311. Le deuxième élément 32 comporte la deuxième semelle 321 et une partie 322a d'une deuxième âme inclinée par rapport au plan de ladite deuxième semelle et solidaire, le long d'un premier bord 323, de la deuxième semelle 321. Le troisième élément 33 comporte une tête 331 solidaire, au niveau de deux bords longitudinaux 338, 339, de parties latérales 333, 334 du troisième élément 33, lesdites parties latérales étant solidaires de la tête 331 et formant une partie des âmes complémentaires des parties d'âme solidaires des semelles.

Les parties latérales 333, 334 du troisième élément 33 sont solidaires des parties d'âmes, respectivement 312a et 322a, solidaires des semelles, au niveau de zones de jonction d'âme respectivement 315a, 325a.

La tête 331 a est ainsi maintenue à distance de la face 21 de la peau 2.

Dans un exemple de réalisation de ce deuxième mode, le troisième élément 33 est rapportée au niveau d'une surface de contact 315a, 325a sensiblement dans le plan local des parties d'âmes 312a, 322a.

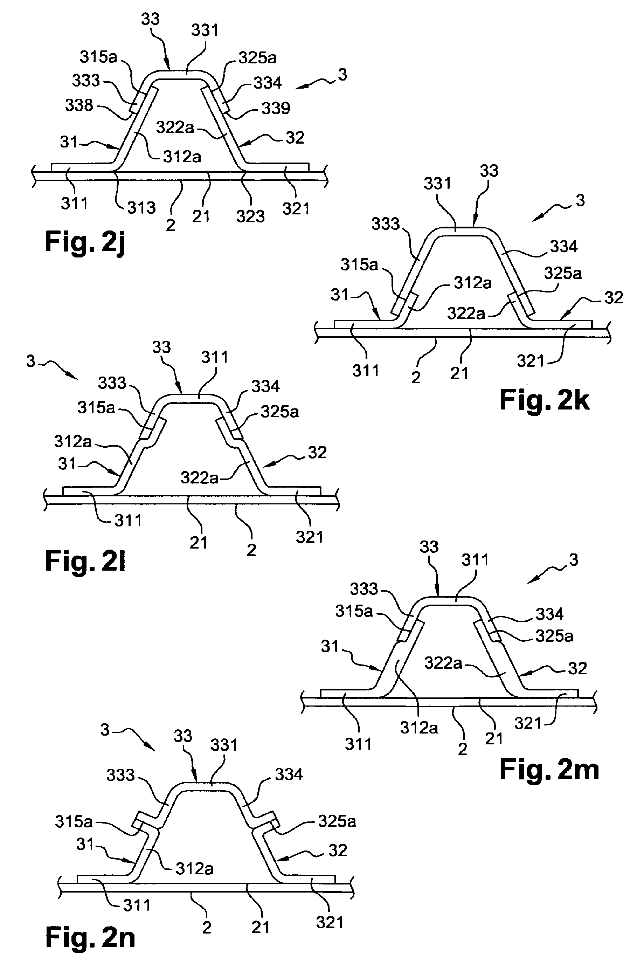

Dans la variante de la figure 2j, les surfaces de contact 315a, 325a sont localisées proches de la tête 331 ce qui présente comme avantage d'augmenter l'inertie du raidisseur en augmentant la quantité de matière du côté de la tête.

Dans la variante de la figure 2k, les surfaces de contact 315a, 325a sont localisées proches des semelles 311, 321 ce qui présente comme avantage de localiser la zone d'assemblage du troisième élément sur les premier et deuxième éléments au voisinage de la peau permettant de simplifier lesdits premier et deuxième éléments.

Les figures 2l et 2m présentent des variantes dans lesquelles des soyages, figure 21, ou des lamages, figure 2m, sont réalisés au niveau des surfaces de contact de sorte que la surface extérieure du raidisseur 3 ne présente pas de forme proéminente sur les âmes.

Dans la variante de la figure 2n, chaque surface de contact 315a, 325a est inclinée par rapport au plan local des âmes respectives par des formes adaptées d'extrémités libres des parties d'âmes 312a, 322a solidaires des semelles et des parties latérales 333, 334, du troisième élément.

De préférence, le raidisseur présente une symétrie par rapport à un plan longitudinal sensiblement perpendiculaire localement à la peau 2, comme illustré sur les figures, mais le raidisseur peut également présenter une dissymétrie, résultant par exemple d'une combinaison de différentes variantes suivant l'âme considérée.

Dans ces différentes variantes de réalisation, la surface de contact 315a, 325a est déterminée lors de la conception du raidisseur pour présenter des dimensions suffisantes pour permettre la fixation des éléments entre eux.

La réalisation du troisième élément séparément des autres éléments du raidisseur présente entre autre l'avantage de permettre l'intégration de fonctions complémentaires au raidisseur.

Les figures 2q, 2r et 3, illustrent des exemples de raidisseurs dans lesquels la tête présente une forme complexe, par exemple en T ou en L, pour faciliter l'installation et l'accrochage de systèmes, tels que par exemple des torons de fils électriques ou des structures secondaires.

Des moyens d'accrochage 5 sont solidaires, par exemple au niveau d'un bord longitudinal ou dans le plan de symétrie longitudinal, de la tête.

De tels moyens d'accrochage consistent par exemple en des languettes de préférence munies de trou de fixation comme illustré sur la figure 3.

Dans une forme particulière, lorsque le raidisseur est de section fermée en Ω, comme illustrée sur les figures 2a à 2c, la présence de bords saillants sur les côtés de la tête permet de fixer des supports spécifiques 51, complémentaires de la forme de la tête, tels qu'illustré sur la figure 4, sans nécessiter de perçage ou de collage.

Le panneau raidi de l'invention est susceptible de variantes à la portée de l'homme du métier en particulier pour intégrer des contraintes propres de conception.

Par exemple, le troisième élément 33 présente une épaisseur sensiblement égale à l'épaisseur des premier 31 et deuxième 32 éléments, ce qui permet d'envisager la production de ces éléments par découpage de flans dans des plaques planes sous la forme de panoplies.

Par exemple, le troisième élément 33 présente une épaisseur différente, de préférence supérieure, de celle des premier et deuxième éléments, ce qui est plus complexe à réaliser pour des raidisseurs oméga réalisés en un seul élément, afin d'en augmenter certaines caractéristiques mécaniques.

Par exemple, le troisième élément 33 est formé dans un matériau composite différent, notamment en ce qui concerne les fibres dudit matériau, du matériau composite des premier 31 et deuxième 32 éléments.

Avantageusement, dans des conditions normales de chargement, les liaisons entre le troisième élément et les premier et deuxième éléments sont moins sollicitées mécaniquement que les liaisons peau / premier et deuxième éléments, ce qui permet de simplifier la fixation entre ledit troisième élément et lesdits premier et deuxième éléments.

Avantageusement, le raidisseur suivant l'invention présente une meilleure tolérance aux dommages. En effet, un impact mécanique sur le troisième élément créerait un délaminage, un décollement entre des couches de fibres au sein du matériau, localisé au niveau de cet élément. Du fait de la réalisation du raidisseur en trois parties, le risque de propagation du délaminage dans les premier et deuxième éléments est fortement atténué. De plus, dans l'éventualité d'un décollement du troisième élément par rapport aux premier et deuxième éléments lié à l'impact, des solutions de réparations peuvent être envisagées telles que par exemple le remplacement du troisième élément et une nouvelle soudure, et ou un rivetage ...

La présente invention ne se limite pas aux exemples de raidisseurs à section fermée décrits ci dessus à titre d'exemples non limitatifs. L'homme du métier est en mesure d'adapter la forme dudit raidisseur à des formes non décrites.

L'invention concerne également un procédé pour réaliser un panneau raidi tel qu'un des panneaux illustré sur les figures 1 à 5.

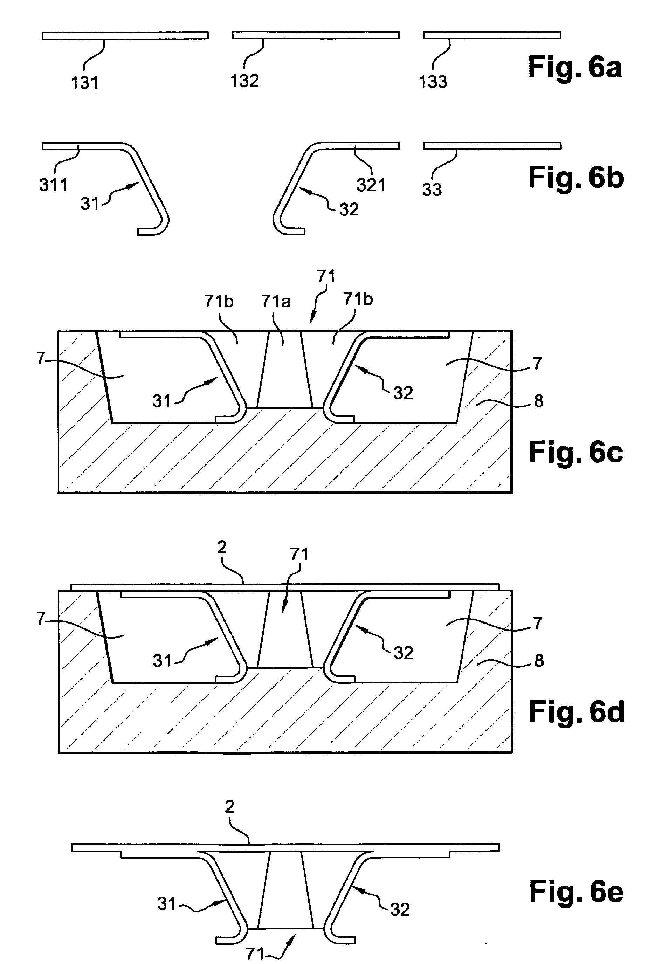

Une description du procédé est faite, voir les figures 6a à 6h, en application de la réalisation d'un panneau raidi semblable au panneau raidi de la figure 1a, les détails du procédé étant illustrés pour un raidisseur ayant une section similaire à celle du raidisseur de la figure 2a.

Suivant une première étape du procédé, les trois éléments 31, 32, 33 du raidisseur sont réalisés séparément.

Cette première étape met en oeuvre des méthodes et procédés conventionnels pour réaliser des pièces élémentaires, connus de l'homme du métier.

Par exemple des flans 131, 132, 133, c'est à dire des éléments plats, sont préparés, par exemple découpés dans des plaques de matériau composite thermoplastique d'épaisseur voulu en prenant en compte l'orientation des fibres devant être respectée, voir figure 6a.

Les flans 131, 132, 133 sont ensuite formés, avantageusement par formage à chaud, figure 6b, pour être amenés à la forme voulue pour chaque élément 31, 32, 33 du raidisseur.

Par exemple, chaque pièce 131, 132, 133 est mise en forme par thermoformage, par exemple dans une machine de type presse chauffante équipée d'un poinçon et d'une matrice, ou d'un poinçon et d'une vessie. Les techniques de mise en forme par thermoformage de pièces en matériau composite à matrice thermoplastique sont connues en soi et ne sont donc pas décrites.

Au cours de cette opération de formage, avantageusement les éléments sont soumis à des efforts de compression pour réaliser une opération de consolidation. Cette opération de consolidation permet de réduire les porosités à l'intérieur du matériau thermoplastique et améliore la liaison entre les différents plis qui le constituent.

A l'issue de cette opération de formage et de consolidation, les éléments 31, 32, 33 sont refroidis à la température ambiante à laquelle ils conservent les formes acquises lors du formage.

Dans une variante de mise en oeuvre du procédé, les flans sont préparés au moyen de fibres préimprégnées de résine thermodurcissable, par exemple par découpe dans un panneau formé par un empilage de plis de fibres préimprégnées, qui sont soumis à une cuisson partielle, c'est à dire à une cuisson interrompue avant la polymérisation complète de la résine, qui confère au matériau intermédiaire obtenu des caractéristiques thermoplastiques.

Les premier et deuxième éléments 31, 32 sont réalisés de sorte à présenter au niveau de leurs semelles 311, 321 une surface d'appui sur la peau 2 correspondant sensiblement au profil de la face 21 de la peau sur laquelle les semelles sont destinées à être fixées.

L'ordre de mise en oeuvre de la phase de consolidation et celle de mise en forme n'est pas imposé et, suivant le procédé, peuvent être réalisées dans l'ordre inverse de l'ordre décrit ou réalisées simultanément sans modifier le résultats desdites phases.

A l'issue de cette première étape, chacun des différents éléments structuraux destinés à former le raidisseur est disponible dans la forme et les dimensions voulues.

Dans une deuxième étape, la peau 2 et les premier et deuxième éléments 31, 32, sont placés les uns par rapport aux autres dans la position voulue pour le panneau raidi.

Dans une première phase de cette deuxième étape, comme illustré sur la figure 6c, les premier 31 et deuxième 32 éléments sont placés individuellement dans un moule 8 de sorte à être maintenus précisément dans la position souhaitée.

Par exemple les premier et deuxième éléments 31, 32 sont positionnés séparément sur des outillages spécifiques 7 de sorte à prendre en compte les formes particulières des premier et deuxième éléments réalisé à l'étape précédente et lesdits premiers et second éléments sont placés avec leurs outillages spécifiques dans le moule 8 dans lequel ils se trouvent calés en position. Les outillages comportent une surface d'appui présentant une forme complémentaire à celles des premier et deuxième éléments.

Un noyau 71, reproduisant la forme de la cavité 4 du raidisseur avec ses variations de forme et de section, est placé entre les âmes des premier et deuxième éléments 31, 32. Le noyau 71 doit être suffisamment rigide pour résister aux manipulations et contraintes mécaniques et thermiques pendant l'étape ultérieure de consolidation.

Le noyau peut être réalisé en matériau métallique ou être constitué de matériaux différents, permettant d'atteindre des exigences thermiques et mécaniques similaires.

Le noyau 71 est réalisé de sorte à pouvoir être extrait par l'ouverture disponible au niveau de la tête 33, après l'étape de consolidation et avant que la tête ne soit fixée.

Le noyau est par exemple, en particulier pour le profil du raidisseur de l'illustration, un noyau à clé réalisé en au moins deux parties. Dans l'exemple de la figure 6c, le noyau est réalisé en trois parties 71 a, 71 b.

Le noyau assure deux fonctions dans l'étape ultérieure de consolidation du panneau. D'un part il permet d'appliquer une pression sur les âmes du raidisseur sans les déformer, y compris à la température de formage et de co-consolidation, et d'autre part il forme une surface d'appui du côté des semelles du raidisseur dans la continuité desdites semelles pour servir de support, au niveau de la cavité, à la peau ultérieurement déposée pour former le panneau.

Dans une deuxième phase de cette deuxième étape, comme illustrée figure 6d, la peau est mise en place sur le moule 8 en recouvrant les outillages 7, 71 assurant !e positionnement des éléments du raidisseur de sorte à recouvrir les semelles aux emplacements voulus sur la peau.

Une telle opération de mise en place de la peau est connue en soi de l'homme du métier.

Par exemple la peau est réalisée par un assemblage de plaques d'un matériau composite thermoplastique afin de réaliser une peau ayant les épaisseurs voulues de la peau du panneau. Avantageusement les plaques sont fixées entre elles par une opération de co-consolidation partielle.

Dans une troisième étape du procédé, la peau 2 et les premier et second éléments 31, 32 subissent une opération de co-consolidation.

Cette opération de co-consolidation se caractérise par l'application d'une pression sur la peau et sur les premier et second éléments simultanément à un chauffage à une température à laquelle la résine est partiellement en fusion, afin de permettre la fusion entre les plis. La pression est par exemple appliquée sur la surface de la peau opposée au moule 8 par l'intermédiaire d'un contre-moule (non représenté). Après refroidissement la matrice du matériau composite thermoplastique est durcie et la peau et les éléments sont fixés entre eux au niveau de leurs surfaces en contact lors de l'opération de co-consolidation.

Dans une quatrième étape du procédé, la peau 2 et les premier et deuxième éléments 31, 32 sont démoulés.

Le moule 8 et les outillages extérieurs 7 nécessaires à la consolidation de la structure du panneau partiellement réalisé sont enlevés, comme illustré sur la figure 6e.

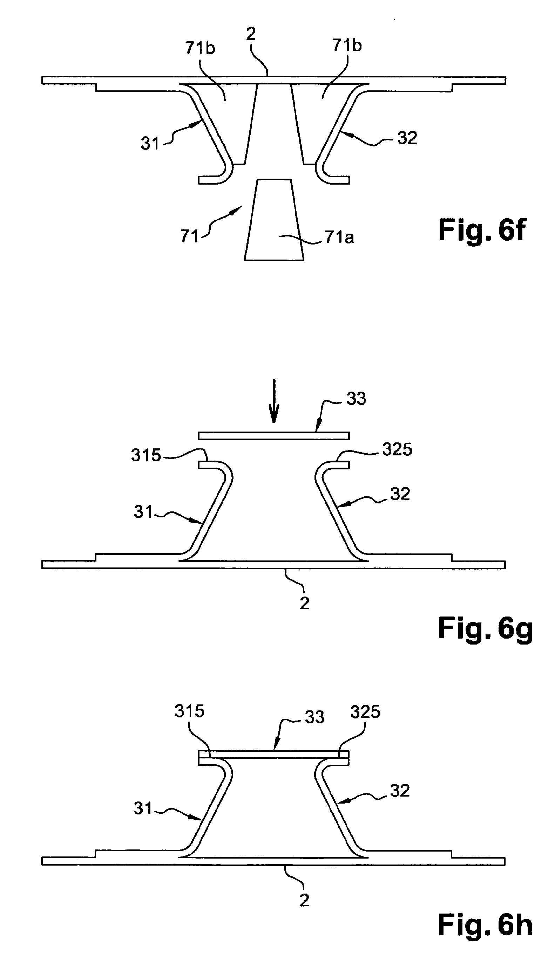

Le noyau 71 prisonnier de la cavité entre les premier et deuxième éléments est extrait, dans le cas illustré en démontant d'abord la clé 71 a qui libère les autres parties 71 b du noyau, par l'ouverture encore présente à l'emplacement du troisième élément non encore assemblé, comme illustré par la figure 6f.

Dans une cinquième étape du procédé, le troisième élément 33 est fixé sur les premier et deuxième éléments 31, 32.

Dans une première phase, figure 6g, de cette cinquième étape, le troisième élément 33 est positionné sur les bords des premier et second éléments 31, 32 opposés à la peau pour se trouver en contact avec lesdits premier et second éléments au niveau des zones de jonction 315, 325 et permettre sa fixation.

Dans une deuxième phase, figure 6h, de cette cinquième étape, le troisième élément 33 est fixé.

Dans un exemple de mise en oeuvre de cette deuxième phase, le troisième élément est riveté au niveau de la zone de jonction.

Dans un autre exemple préféré de mise en oeuvre, le troisième élément 33 est soudé, avantageusement par un procédé de soudage dynamique tel que par exemple le soudage par ultrasons, le soudage par induction ou le soudage par résistance qui permet de solidariser les éléments sans élévation générale de la température des éléments, élévation générale de température qui pourrait provoquer des déformations du raidisseur, et sans exercer de pression élevées, également source de déformation.

Le procédé suivant l'invention permet de réaliser une pièce en matériau composite thermoplastique comportant des raidisseurs à section fermée creuse.

Le procédé suivant l'invention permet de créer des liaisons peau/semelles co-consolidées en utilisant au maximum les avantages des matériaux composites thermoplastiques, liaisons qui sont fortement sollicitées mécaniquement, et de reporter au niveau des liaisons tête/âmes, qui sont moins sollicitées que les liaisons peau/semelles et plus facilement accessibles, l'utilisation de procédés de fixation qui garantissent une résistance structurale suffisante sans avoir les contraintes des procédés de co-consolidation.

## Revendications

1. Procédé de fabrication d'une pièce raidie (1), en matériau composite comportant des fibres organiques ou minérales maintenues dans une matrice organique, comportant une peau (2) formée principalement d'un matériau composite thermoplastique et au moins un raidisseur (3) de longueur L grande par rapport à des dimensions transversales, largeur 1 et hauteur h, dudit raidisseur, ledit au moins un raidisseur comportant deux semelles (311, 321), deux âmes (312, 322), chaque âme étant solidaire au niveau d'un premier bord (313, 323) d'une semelle, et comportant une tête (331) solidarisant les deux âmes entre elles au niveau d'un second bord (314, 324) de chaque âme, distant dudit premier bord, lesdites deux âmes et la tête déterminant avec la peau un volume creux du raidisseur de section transversale fermée lorsque le raidisseur est solidaire de la peau au niveau des semelles, **caractérisé en ce que** le procédé comporte :
- une étape de réalisation :
- d'un premier élément (31) du raidisseur, dans un matériau composite thermoplastique, comportant une première semelle (311) et une première âme (312) ou au moins une partie (312a) d'une première âme,
- d'un deuxième élément (32) du raidisseur, dans un matériau composite thermoplastique, comportant une deuxième semelle (321) et une deuxième âme (322) ou au moins une partie (322a) d'une deuxième âme,
- d'un troisième élément (33) comportant la tête (331),
- une étape de positionnement aux emplacements voulus sur une surface de la peau (2) des semelles (311, 321) des premier et deuxième éléments (31, 32),
- une étape de positionnement d'un noyau (71) à l'emplacement du volume creux du raidisseur, entre les premier (31) et deuxième (32) éléments, ledit noyau étant le cas échéant en au moins deux parties,
- une étape de solidarisation de la peau (2) et des premier et deuxième éléments (31, 32) par co-consolidation du matériau thermoplastique de ladite peau et des semelles (311, 321) des dits premier et deuxième éléments,
- une étape de retrait du noyau (71),
- une étape de fixation du troisième élément (33) sur les seconds bords (314, 324) des premier (31) et deuxième (32) éléments au niveau de zones de jonction (315, 325).

2. Procédé suivant la revendication 1 dans lequel un noyau (71) est formé de deux ou plusieurs parties (71 a, 71 b) permettant de retirer successivement chaque partie du volume creux du raidisseur par une ouverture longitudinale dudit volume creux devant être fermée par la fixation du troisième élément (33).

3. Procédé suivant l'une des revendications précédentes dans lequel le troisième élément est fixé sur les seconds bords (314, 324) des premier (31) et deuxième (32) éléments au niveau des zones de jonction par un procédé de soudage.

4. Procédé suivant la revendication 3 dans lequel le procédé de soudage est un procédé de soudage dynamique.

5. Procédé suivant la revendication 4 dans lequel le procédé de soudage dynamique est un procédé de soudage par ultrason ou un procédé de soudage par induction ou un procédé de soudage par résistance.

6. Procédé suivant l'une des revendications précédentes dans lequel le troisième élément est fixé sur les seconds bords (314, 324) des premier (31) et deuxième (32) éléments au niveau des zones de jonction par rivetage.

7. Panneau raidi (1) en matériau composite comportant une peau (2) constituée d'un matériau composite thermoplastique et comportant un raidisseur (3) de longueur L grande par rapport à des dimensions transversales de largeur I et de hauteur h, dudit raidisseur, ledit raidisseur déterminant avec la peau un volume creux de section transversale fermée, **caractérisé en ce que** ledit raidisseur comporte :
- un premier élément (31) en matériau composite thermoplastique comportant une première semelle (311), en contact avec la peau (2), et une première âme (312),
- un deuxième élément (32) en matériau composite thermoplastique comportant une deuxième semelle (321), en contact avec la peau (2), et une deuxième âme (322),
- un troisième élément (33) comportant une tête (331),
chaque âme (312, 322) des premier (31) et deuxième (32) éléments comportant un bord, dit second bord (314, 324), en contact avec le troisième élément (33) et s'étendant vers un extérieur du raidisseur.

8. Panneau raidi suivant la revendication 7 dans lequel le troisième élément (33) est constitué d'un matériau composite thermoplastique.

9. Panneau raidi suivant l'une des revendications 7 ou 8 dans lequel le troisième élément (33) présente une forme en L pour la fixation d'éléments extérieurs audit panneau.

10. Panneau raidi suivant l'une des revendications 7 ou 8 dans lequel le troisième élément (33) présente une forme en T pour la fixation d'éléments extérieurs audit panneau.

## Claims

1. A method of production of a stiffened part (1), in composite material comprising organic or mineral fibres held in an organic matrix, comprising a skin (2) formed principally from a thermoplastic composite material and at least one stiffener (3) of length L, long in relation to transverse dimensions, width 1 and height h, of the said stiffener, the said at least one stiffener comprising two flanges (311, 321), two webs (312, 322), each web being fixed to a first edge (313, 323) of a flange, and comprising a head (331) fixing the two webs together to a second edge (314, 324) of each web, away from the said first edge, the said two webs and the head determining with the skin, a hollow volume of the closed transversal section's stiffener, when the stiffener is fixed to the skin by the flanges, **characterised in that** the method comprises:
- a step of fulfilment:
- of a first element (31) of the stiffener, in a thermoplastic composite material, comprising a first flange (311) and a first web (312) or at least one part (312a) of a first web,
- of a second element (32) of the stiffener, in a thermoplastic composite material, comprising a second flange (321) and a second web (322) or at least one part (322a) of a second web,
- of a third element (33) comprising the head (331),
- a step of positioning at required locations on a skin surface (2) of the flanges (311, 321) of the first and second elements (31, 32),
- a step of positioning a core (71) at the location of the hollow volume of the stiffener, between the first (31) and second (32) elements, the said core being necessary in at least two parts,
- a step of fixing the skin (2) and the first and second elements (31, 32) by co-consolidation of the thermoplastic material of the said skin and flanges (311, 321) of the said first and second elements,
- a step of withdrawal of the core (71),
- a step of fixing of the third element (33) on the second edges (314, 324) of the first (31) and second (32) elements at junction areas (315, 325).

2. The method according to claim 1 wherein a core (71) is formed of two or several parts (71a, 71b), allowing the successive removal of each part of the hollow volume of the stiffener by a longitudinal opening of the said hollow volume before being closed by the fixing of the third element (33).

3. The method according to one of the previous claims wherein the third element is fixed on the second edges (314, 324) of the first (31) and second (32) elements at the junction areas by a soldering method.

4. The method according to claim 3 wherein the soldering method is a dynamic soldering method.

5. The method according to claim 4 wherein the dynamic soldering method is an ultrasound soldering method, or an induction soldering method, or a resistance soldering method.

6. The method according to one of the previous claims wherein the third element is fixed on the second edges (314, 324) of the first (31) and second (32) elements at the junction areas by riveting.

7. A stiffened panel (1) in composite material comprising a skin (2) made of a thermoplastic composite material and comprising a stiffener (3) of length L, long in relation to transverse dimensions, width 1 and height h, of the said stiffener, the said stiffener determining, with the skin, a hollow volume of closed transversal section, **characterised in that** the said stiffener comprises:
- a first element (31) in thermoplastic composite material, comprising a first flange (311), in contact with the skin (2), and a first web (312),
- a second element (32) in thermoplastic composite material, comprising a second flange (321), in contact with the skin (2), and a second web (322),
- a third element (33) comprising a head (331),
each web (312, 322) of the first (31) and second (32) elements comprising an edge, known as second edge (314, 324), in contact with the third element (33) and extending towards an exterior of the stiffener.

8. The stiffened panel according to claim 7 wherein the third element (33) is made of a thermoplastic composite material.

9. The stiffened panel according to one of the claims 7 or 8 wherein the third element (33) displays an L form for fixing outer elements to the said panel.

10. The stiffened panel according to one of the said claims 7 or 8 wherein the third element (33) displays a T form for fixing outer elements to the said panel.

## Patentansprüche

1. Verfahren zur Herstellung eines versteiften Teiles (1) aus Verbundwerkstoff, umfassend organische oder mineralische Fasern, die in einer organischen Matrix zusammengehalten werden, umfassend eine Hülle (2), die in erster Linie aus einem thermoplastischen Verbundwerkstoff gebildet wird, und zumindest eine Versteifung (3) der Länge L, die in Bezug auf die Querabmessungen der besagten Versteifung, der Breite I und der Höhe h, lang ist, wobei die besagte zumindest eine Versteifung zwei Sohlen (311, 321), zwei Stegbleche (312, 322) umfasst, und jedes Stegblech fest mit einem ersten Rand (313, 323) einer Sohle verbunden ist, und umfassend ein Kopfstück (331), das die beiden Stegbleche im Bereich eines zweiten Randes (314, 324) eines jeden Stegbleches in einem Abstand vom ersten Rand miteinander verbindet, wobei die besagten beiden Stegbleche und das Kopfstück gemeinsam mit der Hülle ein Hohlvolumen der Versteifung mit einem geschlossenen Querschnitt bestimmen, wenn die Versteifung im Bereich der Sohlen fest mit der Hülle verbunden ist, **dadurch gekennzeichnet, dass** das Verfahren folgendes umfasst:
- einen Schritt zur Herstellung:
- eines ersten Elements (31) der Versteifung aus einem thermoplastischen Verbundwerkstoff, umfassend eine erste Sohle (311) und ein erstes Stegblech (312) oder zumindest einen Teil (312a) eines ersten Stegblechs,
- eines zweiten Elements (32) der Versteifung aus einem thermoplastischen Verbundwerkstoff, umfassend eine zweite Sohle (321) und ein zweites Stegblech (322) oder zumindest einen Teil (322a) eines zweiten Stegblechs,
- eines dritten Elements (33) umfassend das Kopfstück (331),
- einen Schritt zum Positionieren der Sohlen (311, 321) der ersten und zweiten Elemente (31, 32) an den gewünschten Stellen auf einer Oberfläche der Hülle (2),
- einen Schritt zum Positionieren eines Kerns (71) an der Stelle des Hohlvolumens der Versteifung, zwischen dem ersten (31) und zweiten (32) Element, wobei der besagte Kern gegebenenfalls aus zumindest zwei Teilen besteht,
- einen Schritt zur festen Verbindung der Hülle (2) mit dem ersten (31) und zweiten (32) Element durch Co-Konsolidierung des thermoplastischen Werkstoffs der besagten Hülle und der Sohlen (311, 321) des besagten ersten und zweiten Elements,
- einen Schritt des Herausziehens des Kerns (71),
- einen Schritt zur Befestigung des dritten Elements (33) an den zweiten Rändern (314, 324) des ersten (31) und zweiten (32) Elements im Bereich der Verbindungszonen (3115, 325).

2. Verfahren nach Anspruch 1, bei dem der Kern (71) aus zwei oder mehr Teilen (71 a, 71 b) gebildet wird, die es möglich machen, nacheinander jeden Abschnitt des Hohlvolumens der Versteifung durch eine Längsöffnung des besagten Hohlvolumens herauszuziehen, die durch die Befestigung des dritten Elements (33) zu verschließen ist.

3. Verfahren nach einem der vorherigen Ansprüche, bei dem das dritte Element im Bereich der Verbindungszonen durch ein Schweißverfahren an den zweiten Rändern (314, 324) des ersten (31) und zweiten (32) Elements befestigt wird.

4. Verfahren nach Anspruch 3, bei dem das Schweißverfahren ein dynamisches Schweißverfahren ist.

5. Verfahren nach Anspruch 4, bei dem das dynamische Schweißverfahren ein Ultraschall-Schweißverfahren oder ein Induktionsschweißverfahren oder ein Widerstandsschweißverfahren ist.

6. Verfahren nach einem der vorherigen Ansprüche, bei dem das dritte Element im Bereich der Verbindungszonen durch Nieten an den zweiten Rändern (314, 324) des ersten (31) und zweiten (32) Elements befestigt wird.

7. Versteifte Paneele (1) aus Verbundwerkstoff umfassend eine Hülle (2) bestehend aus einem thermoplastischen Verbundwerkstoff und umfassend eine Versteifung (3) der Länge L, die in Bezug auf die Querabmessungen der besagten Versteifung, der Breite I und der Höhe h, lang ist, wobei die besagte Versteifung mit der Hülle ein Hohlvolumen mit einem geschlossenen Querschnitt bildet, **dadurch gekennzeichnet, dass** die besagte Versteifung folgendes umfasst:
- ein erstes Element (31) aus einem thermoplastischen Werkstoff umfassend eine erste Sohle (311), in Kontakt mit der Hülle (2), und ein erstes Stegblech (312),
- ein zweites Element (32) aus einem thermoplastischen Werkstoff umfassend eine zweite Sohle (321), in Kontakt mit der Hülle (2), und ein zweites Stegblech (322),
- ein drittes Element (33) umfassend ein Kopfstück (331),
wobei jedes der Stegbleche (312, 322) des ersten (31) und zweiten (32) Elements einen Rand umfasst, der zweiter Rand (314, 324) genannt wird, der mit dem dritten Element (33) in Kontakt steht, und sich in Richtung einer Außenseite der Versteifung erstreckt.

8. Versteifte Paneele nach Anspruch 7, bei der das dritte Element (33) aus einem thermoplastischen Werkstoff besteht.

9. Versteifte Paneele nach einem der Ansprüche 7 oder 8, bei der das dritte Element (33) zur Befestigung von äußeren Elementen an der besagten Paneele eine L-Form aufweist.

10. Versteifte Paneele nach einem der Ansprüche 7 oder 8, bei der das dritte Element (33) zur Befestigung von äußeren Elementen an der besagten Paneele eine T-Form aufweist.
